# EUROPEAN PATENT APPLICATION

(11) **EP 1 511 031 A1**
(43) Date of publication of application: **02.03.2005**
(21) Application number: 02730835.2
(22) Date of filing: 31.05.2002
(51) Int. Cl.: G11B 20/10, H04N 7/16, H04L 9/08, G06F 12/14

(54) **CONTENT DELIVERY/ACCUMULATION SYSTEM, SERVER, TERMINAL, METHOD, AND PROGRAM**

(71) Applicant: FUJITSU LIMITED, Kawasaki-shi, Kanagawa 211-8588 (JP)
(72) Inventor: MIURA, Masayuki, FUJITSU PERSONAL COMPUTER SYS LTD, Inagi-shi, Tokyo 206-0801 (JP)
(74) Representative: Sunderland, James Harry
(86) International application number: PCT/JP2002/005362
(87) International publication number: WO 2003/102948

(57) **Abstract**

A system including a server and a client apparatus. The server includes means for delivering content data via a network to the client apparatus. The client apparatus includes means for receiving the content data, and means for allowing accumulation of content data received from the server when information indicating accumulation allowance is present.

## Description

### TECHNICAL FIELD

The present invention relates to a system for encrypting and delivering digital contents such as music and video in streaming via a network.

### BACKGROUND ARTS

As one of the present encryption streaming technologies, a technology for accumulating streaming contents, which are delivered by digital broadcasting, in a medium on a reception side has been proposed. In this system, secret information on a delivery side such as a broadcaster or a provider can be saved in the medium.

Here, the streaming contents refer to data such as video and sound (including voice) delivered through a network, which can be reproduced simultaneously while being received when the data is viewed. In addition, "secret information can be saved" means that information on the delivery side can be saved in an area that the reception side cannot access.

However, in such a system, contents which can be saved are limited only to contents that do not rely on others' rights (copyright, etc.) such as contents produced by a provider (broadcaster) itself. In other words, such a system controls that contents for which others have rights entirely cannot be accumulated.

In addition, charging systems can be classified mainly into two kinds of methods. a method in the case where a content holder directly delivers contents and a method in the case where a provider delivers contents. Here, the content holder refers to an owner of a right such as a copyright and so on, for the contents.

In the system in which the content holder directly delivers contents, the content holder doubles as a provider. In this case, the content holder often establishes systems ranging from a delivery system to a charging system independently and operates the systems.

In the system in which the provider delivers contents, the provider delivers contents, for which the provider has entered into agreement with the content holder, for a fee and shares a charge collected from a user, who receives and views the contents, with the content holder.

### DISCLOSURE OF THE INVENTION

Reception of streaming contents on a network is synonymous with "viewing of broadcast" unless the contents are accumulated even if the contents are digital contents. However, if it is allowed to deliver streaming contents, which are digital contents without quality deterioration, and receive and accumulate the contents, the reception has the same meaning as that of "duplication of contents", that is, "purchase of contents".

Therefore, a content holder tends to be careful about delivery of an accumulation type and not to provide popular contents for which others have rights. As a result, a streaming system itself delivering such contents becomes less attractive and goes out of use.

On the other hand, when all broadcasts are delivered in a form of sales, cost for the broadcasts is added to a license fee for streaming contents. As a result, the license fee in the system is expensive, and the system is avoided by users.

As a result of a compromise for solving such a problem, accumulation of contents is limited under the present situation. In other words, a user can view contents relatively inexpensively but cannot accumulate the contents.

However, it is a defect of the system that, although contents at a product level are delivered to a user all the way, the contents cannot be used again.

In addition, there is a problem concerning a system for selling contents on a network. In the case where a provider enters into agreement with a content holder to sell contents, the provider has to deliver the contents in accordance with sales strategies of the content holder. It is a significant burden for the provider side to follow the sales strategies.

The present invention has been devised in view of such problems of the conventional technique. In short, it is an obj ect of the present invention to realize a technique with which both a user, who desires to view contents inexpensively, and a user, who desires to accumulate and own the contents, can be provided with the contents.

Moreover, in such provision of contents, the present invention realizes a function for protecting a content holder and supporting charging for the provision of the contents while reducing restrictions imposed on a provider by the content holder.

In order to solve the problems, the present invention adopts means described below. That is, the present invention relates to a system, including a server and a client apparatus, in which
the server includes means delivering content data to the client apparatus through a network, and
the client apparatus includes:
means receiving the content data; and
means permitting accumulation of the content data received from the server in the case where information indicating permission for accumulation is present.

It is preferable that the content data delivered from the server be encrypted, and
that the client apparatus include:
means referring to decoding information; and
means decoding the content data received from the server in accordance with the decoding information.

It is preferable that the system includes saving means saving the decoded content data in the case where accumulation of the content data is permitted.

It is preferable that the saving means of the client apparatus save the decoded content data in a protected device in which copying of saved data is not permitted.

It is preferable that the client apparatus include means outputting the decoded content data in a form viewable by a user.

It is preferable that the server include means encrypting the content data to be provided.

It is preferable that the information indicating permission for accumulation is provided by a purchase procedure for content data corresponding to the information.

It is preferable that the server include:
means issuing the decoding information; and
means issuing the information indicating permission for accumulation.

It is preferable that the server include a first server having means delivering the content data and a second server having means issuing the decoding information.

The present invention may be an electronic apparatus, characterized by including:
means inputting content data; and
means permitting accumulation of the content data in the case where information indicting permission for accumulation is present.
the present invention may be a system, including a server and a client apparatus, in which
the server includes means delivering content data to the client apparatus through a network, and
the client apparatus includes:
   means receiving the content data;
   means accumulating the received content data;
   means outputting the received content data in a form viewable by a user; and
   means outputting the accumulated content data in a form viewable by the user in the case where information provided by a purchase procedure for the content data is present.

The present invention may be an electronic apparatus including:
means inputting content data;
means accumulating the inputted content data;
means outputting the inputted content data in a form viewable by a user; and
means outputting the accumulated content data in a form viewable by the user in the case where information provided by a purchase procedure for the content data is present.

The present invention may be a method with which a computer, other apparatuses, machines, and the like execute any one kind of the processing described above. In addition, the present invention may be a program that causes a computer, other apparatuses, machines, and the like to execute any of the functions or the steps or any kind of the processing described above. Further, the present invention may be a recording medium readable by a computer, other apparatuses, machines, and the like in which such a program is recorded.

### BRIEF DESCRIPTION OF THE DRAWINGS

FIG. 1 is a system diagram of an information system in accordance with a first embodiment of the present invention;
FIG. 2 is a functional block diagram of a terminal 3 shown in FIG. 1;
FIG. 3 is a diagram showing a processing procedure of the terminal 3 at the time when a user views contents;
FIG. 4 is a diagram showing a procedure with which a user acquires a purchase key from a holder server 2 that is operated by a content holder;
FIG. 5 is a diagram showing a procedure for delivering contents in a provider server 1 operated by a provider;
FIG. 6 is a diagram showing a procedure of brokerage sales for issuing a purchase key in the provider server 1;
FIG. 7 is a diagram showing a procedure for delivering a purchase key in a holder server 2 operated by a content holder;
FIG. 8 is a diagram showing a processing procedure of the terminal 3 at the time when a user view contents in a second embodiment of the present invention;
FIG. 9 is a diagram showing a procedure with which the provider server 1 delivers contents in the second embodiment of the present invention; and
FIG. 10 is a functional block diagram of a terminal 3A in accordance with a third embodiment of the present invention.

### BEST MODE FOR CARRYING OUT THE INVENTION

Preferred embodiments of the present invention will be hereinafter explained with reference to the drawings.

### «First Embodiment»

### <Outline of System>

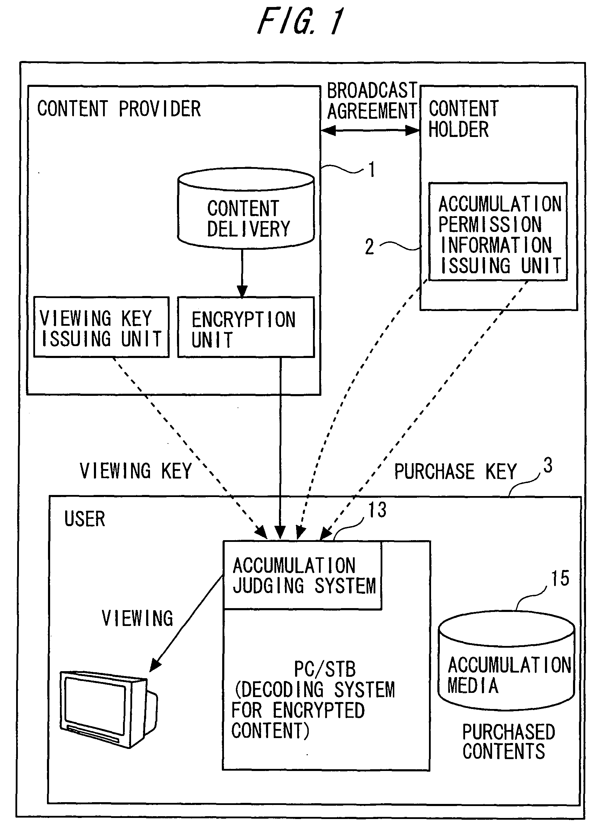

A first embodiment of the present invention will be hereinafter explained on the basis of drawings in FIG. 1 to FIG. 7. FIG. 1 shows a system diagram of an information system of the present invention. This information system is constituted by connecting a server of a content provider (hereinafter referred to as provider server 1), a server (hereinafter referred to as holder server 2) of an owner (hereinafter referred to as content holder) of a right for contents, and a terminal 3 of a user through a network.

Note that, FIG. 1 shows as if an encryption unit and a viewing key issuing unit are present in one provider server 1. However, the provider server 1 may be constituted by plural servers associated for processing to provide the encryption unit and the viewing key issuing unit in separate servers.

Contents are streaming data such as video or sound (including voice) described above and other various data. Note that, rather than providing the terminal 3 of the user with contents from the provider server 1 through the network, the contents may be recorded in various portable recording media such as a CD-ROM, a DVD, and a Compact Flash (compact flash is a trademark of Sun Disk Corporation in the United States) and provided.

The provider server 1 and the holder server 2 are general computers that are connectable to a network. In addition, the terminal 3 is a personal computer, a set-top box for cable television, a set-top box for receiving satellite broadcasting, a tuner, or the like (in FIG. 1, these are generally referred to as PC/STB).

The provider server 1 has an encryption unit to encrypt contents provided from the holder server 2 and deliver the encrypted contents to the terminal 3 of the user. In addition, the provider server 1 has a viewing key issuing unit and issues a viewing key for decoding the encrypted contents. This viewing key is provided to the terminal 3 through a network or through a medium readable by the terminal 3. The holder server 2 provides the provider server 1 with contents. Such provision and delivery of contents are based upon a broadcasting agreement between a content holder and a content provider.

The holder server 2 has an accumulation permission information issuing unit and issues accumulation permission information (this is referred to as purchase key) for accumulating the contents decoded in the terminal 3. This purchase key is provided to the terminal 3 through the network or the medium readable by the terminal 3.

The content holder may provide a user with this purchase key directly. In addition, the content holder may provide a user with this purchase key indirectly through the content provider.

With such an information system, the user can view contents, for which the content holder owns a right such as a copyright, through the content provider. In that case, concerning viewing of the contents, the user can obtain a viewing key and view the contents by paying an ordinary license fee (or free of charge in a form of an agreement).

On the other hand, the user can purchase the contents rather than simply viewing the contents. Purchasing the contents means that the user accumulates and owns the contents in a form viewable at any time.

In the case where the user accumulates contents, the user performs a purchase procedure with respect to the content provider or the content holder and pays a separate fee (a purchase price for the contents) in addition to the ordinary license fee. Through such procedures, the user is capable of obtaining the purchase key and accumulating the contents.

As shown in FIG. 1, the terminal 3 is equipped with an accumulation judgment system 13 in order to accumulate the contents described above. The user purchases the purchase key from the content holder separately (the content provider may sell the purchase key as an agent) and provides the accumulation judgment system 13 with the purchase key. With this purchase key, the decoded contents can be accumulated in the terminal 3.

The purchased contents are accumulated in an accumulation medium 15 and outputted to a television monitor or the like according to an operation from the user. Consequently, the user can view the purchased contents at any time.

Note that, in this embodiment, this information system will be explained with acceptance on techniques, which are widely known, described below.
(1) A stream delivery technique for encrypting and delivering stream contents. This is, for example, a delivery technique for scrambled MPEG data.
(2) A technique for a content purchase system for delivering an encryption key to a user, causing the user who has entered into agreement to decode contents, and providing the user with the contents. This is, for example, a technique for delivery of an encryption key for removing (descrambling) the scramble and a technique of descramble by the encryption key.
(3) An apparatus for saving the encryption key and the descrambled contents after protecting the encryption key and the contents from illegal copying by the user. Such an apparatus is called a tamper resistant apparatus. In addition, a structure for such protection is called a tamper resistant structure. Such a technique is known as a technique with which, for example, in the case where information recorded in an IC card is rewritten, the information disappears, the information is invalidated, or the information cannot be used.

A system for protecting digital contents such as music and video is called a DRM (Digital Rights Manager) and has been proposed by Microsoft, RealNetworks, Intertrust, and the like in the United States.

In addition, as a technique for such an apparatus for protecting contents, a technique for preventing copying, intercepting, or illegal access (tampering) in a transmission path from a source device of the contents (e.g., a DVD storing thecontents, etc.) to a sink device (harddisksavingthecontents, etc.) has been proposed (e.g., see 5C Digital Transmission Content Protection White Paper, Revision 1.0, July 14, 1998, or Digital Transmission Content Protection Specification Volume I Revision 1.2 (both from http://www.dtcp.com)).

This information system is premised on the tamper resistant apparatus realized by such a technique and makes it possible to deliver identical contents for viewing and for accumulation and charge different fees for viewing and accumulating of contents.

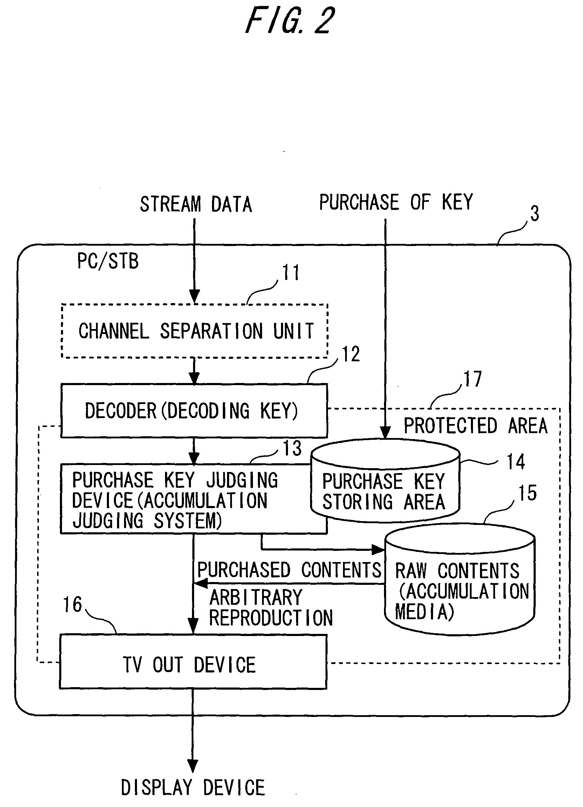

FIG. 2 shows a functional block diagram of the terminal 3. This terminal 3 provides a function for receiving stream data from the provider server 2 and outputting to a display device not shown in the figure.

As shown in FIG. 2, the terminal 3 has: a channel separation unit 11 that separates the received stream data for each channel; a decoder 12 that decodes the stream data separated for each channel (encrypted data); an accumulation judging system 13 (also called a purchase key judging system) that judges propriety of accumulation of the decoded stream data; a purchase key storing area 14 for storing a purchase key with which the accumulation judging system 13 judges propriety of accumulation; an accumulation medium 15 for accumulating the decoded contents (Raw contents) ; and a TVOUT device 16 that generates an output signal of such as video or voice from the decoded contents.

The encrypted stream data is delivered from the provider server 1 and decoded by the decoder 12. Here, the decoding means decoding of the encrypted stream data.

The accumulation judging system 13 reads contents information from the decoded data and performs matching with a purchase key that has already been purchased. Here, the contents information is information with which the contents (stream data) can be specified uniquely. In addition, the purchase key is information with which the purchased contents can be specified uniquely. According to the matching processing between the contents information having such information contents and the purchase key, it can be judged whether the purchase key has been acquired, that is, whether contents corresponding to the purchase key have been purchased.

Then, in the case where the purchase key for the contents has been purchased, the accumulation judging system 13 accumulates the contents in the accumulation medium 15. Here, the accumulation medium 15 is, for example, a hard disk device, a DVD (Digital Versatile Disk) recording device, or various tape drive devices, and so on.

The contents stored in the accumulation medium 15 can be reproduced at any time via the TVOUT device 16 according to an instruction from the user. Here, the TVOUT device 16 includes, for example, an MPEG decoder, a D/A converter, and so on.

Note that, among the components in FIG. 2, the channel separation unit 11, the decoder 12, and the TVOUT 16 are widely known as components for a DIRD (Digital Integrated Receiver/Decoder) of a digital broadcast receiver.

A dotted line part 17 in FIG. 2 is a protected area and has a function for keeping attacks from the outside off. In addition, the purchase key, which is secret information, and the Raw contents, which are products themselves, cannot be moved or copied to others.

### <Actions>

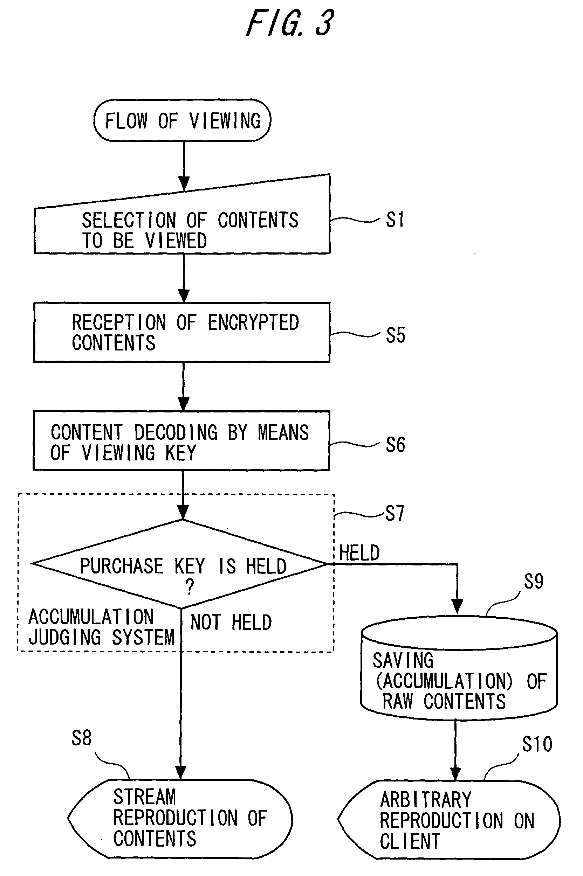

FIG. 3 shows a processing procedure of the terminal 3 at the time when a user views contents. This processing is realized by a CPU, not shown in the figure, in the terminal 3 executing a predetermined processing program.

In this processing, first, selection of contents to be viewed by a user (S1) is received. Then, the terminal 2 receives the selected contents (encrypted contents) (S5). Then, the terminal 3 decodes the encrypted contents (S6).

Next, the terminal 3 judges whether a purchase key for the contents has been acquired (S7). If the purchase key for the contents has not been acquired, the terminal 3 simply reproduces the contents in streams (S8).

On the other hand, if the purchase key for the contents has been acquired, the terminal 3 accumulates the decoded contents (they are called Raw contents) in the accumulation medium 15 (S9). The Raw contents accumulated in the accumulation medium 15 are reproducible on the terminal 3 arbitrarily. Here, "reproducible arbitrarily" means, for example, reproducible by a user at any time.

Note that, it is needless to mention that, in the case where the purchase key has been acquired, the contents are accumulated in the accumulation medium 15 in S9, and the contents can be reproduced in streams in the same manner as in S8.

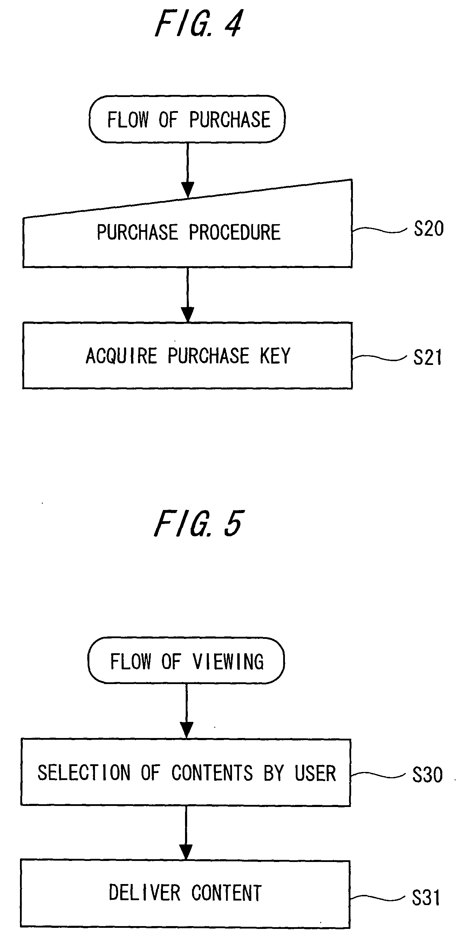

FIG. 4 shows a procedure with which a user acquires a purchase key from the holder server 2 operated by the content holder. In this processing, the user accesses the holder server 2 from the terminal 3 and performs a purchase procedure (S20). This is, for example, processing for requesting purchase of desired contents for web pages provided by the holder server 2.

At this point, payment processing in which the user makes payment for the purchase key to an account of the contents holder is executed. In exchange for this payment procedure, a purchase key for the contents desired by the user is downloaded to the terminal 3 and stored in the purchase key storing unit 14. According to such a procedure, the user acquires the purchase key (S21).

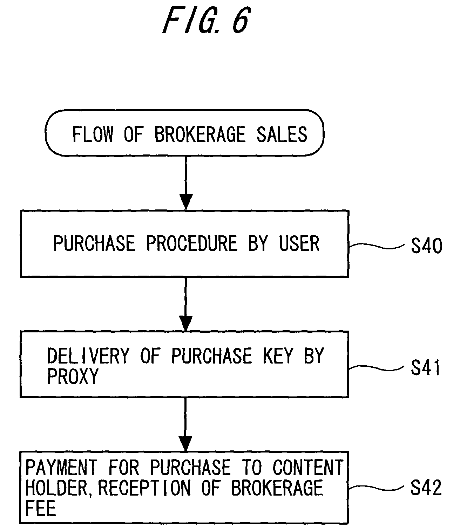

FIG. 5 shows a procedure for delivering contents in the provider server 1 operated by the provider. This processing is realized by a CPU, not shown in the figure, of the provider server 1 executing a predetermined processing program.

In this processing, the provider server 1 receives selection of contents from a user (S30). This is, for example, processing for receiving selection of contents desired by the user on a web page of the provider server 1.

Then, the provider server 1 delivers the selected contents to the terminal 3 of the user (S31).

FIG. 6 shows a procedure of brokerage sales for issuing a purchase key in the provider server 1. In this processing, the provider server 1 issues a purchase key to a user instead of the content holder.

In this processing, first, the provider server 1 receives a purchase procedure from the user (S40). At this point, the user designates desired contents and performs a procedure for payment for the purchase to the provider server 1.

Then, the provider server 1 distributes a purchase key for the contents desired by the user by proxy (S41).

Then, the provider server 1 executes processing for payment for the purchase to an account of the content holder (S42). However, an amount of the payment is an amount obtained by deducting a brokerage fee from a purchase price payable by the user. Consequently, the content provider receives the brokerage fee (S42).

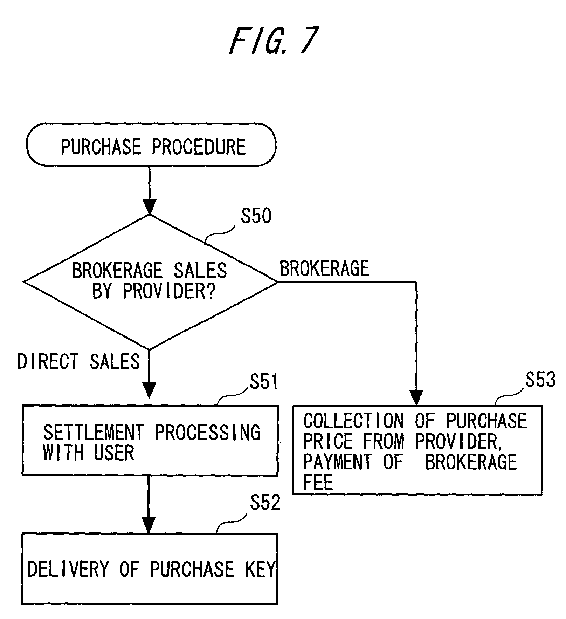

FIG. 7 shows a procedure for distributing a purchase key in the holder server 2 or the provider server 1. In this processing, first, the user selects brokerage sales by the provider or direct sales by the content holder (S50).

In the case where the user selects the direct sales, direct settlement with the user is performed in the holder server 2 (S51) . This settlement is performed by, for example, the user access ingweb pages of the holder server 2 and executing a purchase procedure. Then, the holder server 2 distributes a purchase key for contents desired by the user to the terminal 3 of the user (S52).

On the other hand, in the case where the user selects the brokerage sales, the brokerage sales are performed in the provider server 1. At this point, the purchase key is delivered from the provider server 1 to the user by proxy and payment for the purchase is collected, and a brokerage fee is paid from the content holder to the provider (S51). This processing is the same as the processing shown in FIG. 6.

According to such processing, the user can obtain the purchase key for the desired contents and purchase the contents provided from the provider. According to this information system, a user who does not have to purchase contents only has to enter into an ordinary viewing agreement with the provider. In that case, the user can view the contents inexpensively or free of charge in accordance with conditions of the agreement.

On the other hand, a user who desires to purchase contents can purchase and accumulate the contents through the same channel as an ordinary viewing channel by acquiring a purchase key separately.

Such a purchase key or purchased Raw contents are stored in a protected area where the user cannot copy. Therefore, the content holder can allow only viewing for the user, who does not purchase the purchase key, and allow accumulation for the user, who has purchased the purchase key, after preventing copying.

Thus, the content holder can collect a proper fee according to viewing and accumulation of the contents. In addition, viewing of the contents and purchase of the contents are realized by delivering the contents once. Therefore, it is unnecessary to prepare contents for viewing and contents for purchase separately as in the past.

### <Modifications>

In the above-mentioned embodiment, the user accesses the holder server 2 of the content holder or the provider server 1 and downloads a purchase key through the network. However, implementation of the present invention is not limited to such a procedure. For example, the user may acquire a purchase key recorded in an IC card, a magnetic card, or other detachable recording media in a shop or the like.

Then, the terminal 3 has only to be provided with a recording medium reading unit (e.g., a card slot, etc.) for reading the purchase key from such a recording medium. The terminal 3 has only to store the purchase key read from the recording medium reading unit in the purchase key storing unit 14.

### «Second Embodiment»

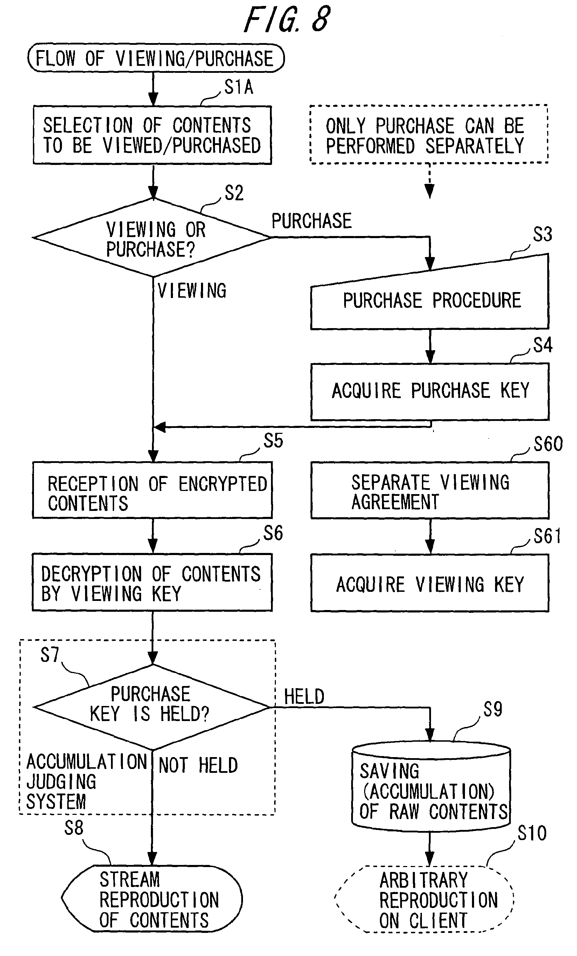

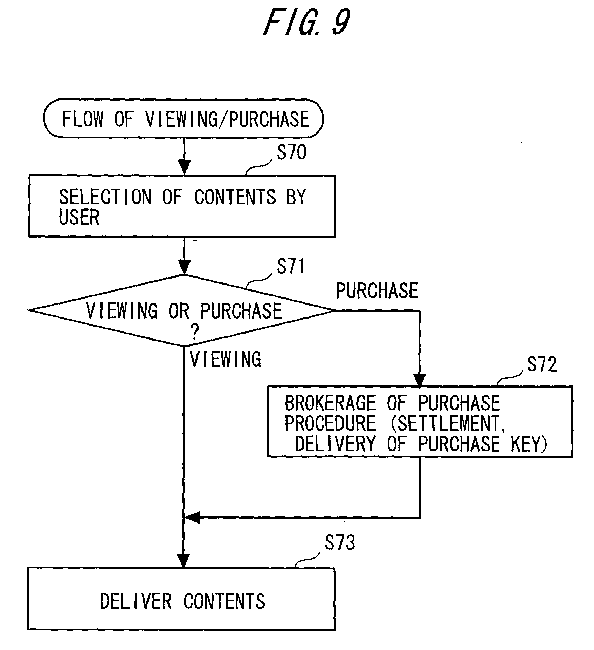

An information system in accordance with a second embodiment of the present invention will be herein after explained on the basis of drawings in FIG. 8 and FIG. 9. In the above-mentioned embodiment, the information system with which a user can purchase contents that he or she desires to view by acquiring a purchase key in advance has been explained. In this embodiment, an information system can further perform a purchase procedure when viewing contents will be explained. Other components and actions are the same as those in the case of the first embodiment. Thus, the identical components will be denoted by the identical reference numerals and signs, and an explanation of the components will be omitted. In addition, the drawings in FIG. 1 to FIG. 7 will be referred to as required.

FIG. 8 shows a processing procedure of the terminal 3 at the time when a user views contents in this information system. In this processing, first, as in the first embodiment (FIG. 3), the user selects contents to be viewed or purchased (S1A).

Next, the terminal 3 causes the user to select whether the user views or purchases the contents. If the user selects purchase, the terminal 3 causes the user to perform a purchase procedure (S3). This is processing for the direct sales in the holder server 2 (see FIG. 7), the brokerage sales in the provider server 1 (see FIG. 6), or the like as in the first embodiment. When this purchase procedure is completed, the terminal 3 acquires a purchase key (S4). In addition, in this embodiment, it is assumed that the user enters into an agreement with the provider separately (S60) and acquires a viewing key (S61).

In the following description, since processing of S5 and subsequent steps is the same as that in the first embodiment (FIG. 3), an explanation of the processing will be omitted. Note that, in the information system of this embodiment, it is needless to mention that a purchase key may be purchased separately as in the first embodiment. In other words, in the case where the user has already purchased the purchase key separately, contents can be accumulated even if the purchase key is not purchased with the processing of S3 and S4 in FIG. 8.

FIG. 9 shows a procedure in which the provider server 1 delivers contents. In this processing, first, the provider server 1 receives selection of contents to be viewed or purchased by the user (S70).

Next, the provider server 1 causes the user to select whether the user views or purchases the contents (S71). If the user selects viewing, the provider server 1 directly delivers the selected contents (S73).

On the other hand, if the user selects purchase, the provider server 1 executes brokerage processing of a purchase procedure (S72). This processing is the same as the processing in FIG. 6 explained in the first embodiment. Then, the provider server 1 delivers the contents (S72).

As described above, according to the information system of this embodiment, when the user views contents, contents desired to view can be purchased by further performing the purchase procedure.

On the other hand, the content holder can cause the user to simply view or purchase by further identical contents according to a request from the user.

### <Modification>

In both the first embodiment and the second embodiment, the embodiments have been explained on the basis of the assumption that an on-demand system in which a user selects contents and the contents are delivered in response to the selection (e.g., see FIG. 5). However, implementation of the present invention is not limited to such a system.

For example, contents may be delivered through data broadcasting, maybe received by a broadcast receiving apparatus, may be accumulated in an accumulation medium. In such a form of data delivery, as described in the first embodiment and the second embodiment, the contents may be provided for value or may be provided free of charge. In other words, the contents may be provided to the user by free content broadcasting.

### «Third Embodiment»

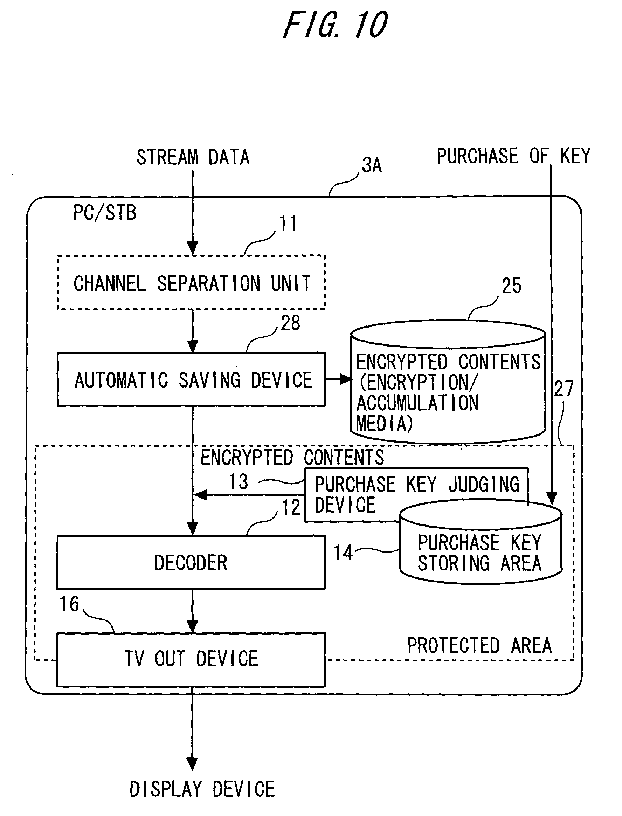

An information system in accordance with a third embodiment of the present invention will be explained on the basis of a drawing in FIG. 10. In the first embodiment, the information system can further accumulate contents desired to view by acquiring a purchase key in advance has been explained. In addition, in the second embodiment, the information system can purchase contents by acquiring a purchase key when viewing the contents has been explained.

In this embodiment, an information system in which a user accumulates encrypted contents first and can purchase a purchase key later will be explained. Other components and actions are the same as those in the first embodiment or the second embodiment. Thus, the identical components will be denoted by the identical reference numerals and signs, and an explanation of the components will be omitted. In addition, the drawings in FIG. 1 to FIG. 9 will be referred to as required.

FIG. 10 shows a functional block diagram of a terminal 3A in accordance with the third embodiment of the present invention. Compared with the terminal 3 (FIG.2) of the first embodiment, this terminal 3A has an automatic saving device 28 and an encryption/accumulation medium 25, which accumulates encrypted contents, outside a protected area 27.

This automatic saving device 28 always saves encrypted contents to be received in the encryption/accumulation medium 25. The encryption/accumulation medium 25 constitutes a so-called ring buffer and saves encrypted contents up to a predetermined volume. Then, when contents to be saved exceed the predetermined volume, contents saved long time ago are sequentially discarded.

With such an automatic saving device 28, the user can freely save contents, which are planned to be purchased in advance. However, data to be saved here is encrypted data (encrypted contents), and the user cannot view the contents as they are. In order to view the contents, the user has to acquire a purchase key for viewing the contents.

In this information system, the user acquires the purchase key corresponding to the contents according to the purchase procedure described in the first embodiment and stores the purchase key in the purchase key storing area 14.

When reproduction of (output instruction for) the encrypted accumulated contents is performed by an operation of the user, the accumulation judging system 13 (purchase key judging device) of the terminal 3 judges whether the purchase key corresponding to the encrypted contents has been stored in the purchase key storing area 14 and judges whether the encrypted contents have been purchased.

Then, if the purchase key has been stored, that is, if the purchase procedure for the encrypted contents has been performed, the encrypted contents corresponding to the purchase key are read out from the encryption/accumulation medium 25, decoded by the decoder 12, and outputted to a display device through the TVOUT device 15. If the purchase key is stored in the purchase key storing area 14, thereafter, it is also possible to reproduce the contents at any time according to an operation of the user, and to be outputted to the display device through the decoder 12 and the TVOUT device 16.

As described above, according to this information system, encrypted contents are accumulated in advance and the user can view the contents at will by acquiring a purchase key separately.

### <Modifications>

In the third embodiment, the example has been described, in which encrypted contents are always accumulated in the encryption/accumulation medium 25 by the automatic saving device 28 and a user acquires a purchase key separately to thereby decode and view the contents. However, implementation of the present invention is not limited to such a constitution.

For example, the automatic saving device 28 may accumulate contents reserved by setting of a user in the encryption/accumulation medium 25. In that case, since only contents desired by the user are accumulated, it is unnecessary to constitute the encryption/accumulation medium 25 as a ring buffer.

In addition, such an automatic saving device 28 for reserving accumulation of contents may be incorporated in the terminal 3 explained in the first embodiment. In that case, it is sufficient that, in the case where a purchase key corresponding to contents reserved by the user is saved in the purchase key storing area 14, the contents be decoded and the automatic saving device 28 accumulate the contents in the accumulation medium 15 in Fig. 2.

### «Effects of Embodiments»

In the conventional technique, accumulation of contents is limited by classified into contents that can be accumulated and contents that cannot be accumulated. However, this information system eliminates the need for such classification.

A user is capable of viewing contents free of charge or at a normal viewing fee. However, the user pays a fee (purchase price for the contents) separately, whereby it becomes possible to accumulate the contents.

In order to realize a system for such accumulation, the accumulation judging system 13 is installed in the terminal 3 as shown in FIG. 1. The user purchases a purchase key from a content holder separately (or a content provider may sell the purchase key by proxy) and the contents can be accumulated by saving the purchase key in the purchase key storing area 14.

Broadcasting and purchase of contents are charged in different systems in this way, whereby the content holder can develop sales strategies freely concerning sales of the contents (without a trouble of establishing a delivery system by itself).

This leads to a movement of permitting broadcasting of contents as a part of the sales strategies and distributing the contents widely. This is directly linked to activation of the delivery system.

In addition, a provider side can concentrate only on delivery of contents leaving content sales to the content holder.

Moreover, the user can receive contents inexpensively for viewing and can purchase contents, which the user desires to purchase at all costs, from the same system. Thus, the user does not feel it troublesome.

### «Recording Medium readable by a computer or the like»

A program for causing a computer, other apparatuses, machines, and the like (hereinafter referred to as a computer and the like) to realize any one of the functions can be recorded in a recording medium readable by the computer and the like. Then, the function can be provided by causing the computer and the like to read and execute the program in the recording medium.

Here, the recording medium readable by the computer and the like means recording media in which information such as data, program, and so on can be accumulated by an electric, magnetic, optical, mechanical, or chemical action, and can be read from the computer and the like. Examples of recordingmedia removable from the computer and the like among such recording media include a floppy disk, a magneto-optical disk, a CD-ROM, a CD-R/W, a DVD, a DAT, an 8mm tape, a memory card, and so on.

In addition, examples of recording media fixed to the computer and the like include a hard disk, a ROM (read only memory), and so on.

### «Data communication embodied by a carrier wave»

The program can be stored in a hard disk or a memory of the computer and the like and distributed to other computers through a communication medium. In this case, the program is transmitted through the communication medium as a data communication signal embodied by a carrier wave. Then, the computer and the like, which have received the distribution, can be provided the function.

Here, the communication medium may be any of: wire communication media such as metal cables including a coaxial cable and a twist pair cable and optical communication cables and so on; or radio communication media such as, for example, satellite communication and ground wave radio communication and so on.

In addition, the carrier wave is an electromagnetic wave or light for modulating a data communication signal. However, the carrier wave may be a DC signal. In this case, the data communication signal has a base band wave form without the carrier wave. Therefore, the data communication signal embodied by the carrier wave may be a modulated broadband signal or an unmodulated base band signal (equivalent to a case where a DC signal with voltage 0 is set as the carrier wave).

### INDUSTRIAL APPLICABILITY

The present invention can be used in: a manufacturing industry for information apparatuses having a broadcasting function, a broadcast receiving function, a communication function, and the like; a service industry using such information apparatuses; and a production industry for contents provided in such a service industry.

## Claims

1. A system comprising a server and a client apparatus, wherein:
the server includes means delivering content data to the client apparatus through a network; and
the client apparatus includes:
means receiving the content data; and
means permitting accumulation of the content data received from the server in a case where information indicating permission for accumulation is present.

2. A system according to claim 1, wherein:
the content data delivered from the server is encrypted; and
the client apparatus includes:
means referring to decoding information; and
means decoding the content data received from the server in accordance with the decoding information.

3. A system according to claim 2, comprising saving means saving the decoded content data in a case where accumulation of the content data is permitted.

4. A system according to claim 3, wherein the saving means of the client apparatus saves the decoded content data in a protected device in which copying of saved data is not permitted.

5. A system according to claim 2, wherein the client apparatus includes means outputting the decoded content data in a form viewable by a user.

6. A system according to claim 2, wherein the server includes means encrypting the content data to be provided.

7. A system according to claim 1, wherein the information indicating permission for accumulation is provided by a purchase procedure for content data corresponding to the information.

8. A system according to claim 1, wherein
the server includes:
means issuing the decoding information; and
means issuing the information indicating permission for accumulation.

9. A system according to claim 2, wherein
the server includes a first server having means delivering the content data and a second server having means issuing the decoding information.

10. An electronic apparatus, **characterized by** comprising:
inputting means inputting content data; and
means permitting accumulation of the content data in a case where information indicting permission for accumulation is present.

11. An electronic apparatus according to claim 10, wherein the inputting means inputs the content data to be delivered from a server through a network.

12. An electronic apparatus according to claim 10, wherein the content data is encrypted, and
the electronic apparatus further comprises:
means referring to decoding information; and
means decoding the content data received from the server in accordance with the decoding information.

13. An electronic apparatus according to claim 12, comprising saving means saving the decoded content data in a case where accumulation of the content data is permitted.

14. An electronic apparatus according to claim 13, wherein the saving means saves the decoded content data in a protected device in which copying of saved data is not permitted.

15. An electronic apparatus according to claim 12, comprising means outputting the decoded content data in a form viewable by a user.

16. An electronic apparatus according to claim 10, wherein the information indicating permission for accumulation is provided by a purchase procedure for content data corresponding to the information.

17. A method of sending and receiving content data in a system including a server and a client apparatus, comprising the steps of:
delivering content data to the client apparatus through a network by the server;
receiving the content data in the client apparatus; and
permitting accumulation of content data received in the client apparatus in a case where information indicating permission for accumulation is present.

18. A method of processing content data in an electronic apparatus, comprising the steps of:
inputting the content data; and
permitting accumulation of the content data in a case where information indicting permission for accumulation is present.

19. A program for causing a computer, which delivers content data to a client apparatus, to execute the steps of:
delivering the content data through a network; and
issuing information indicating permission for accumulation that permits the client apparatus to save the content data to be delivered.

20. A program according to claim 19, comprising the steps of:
creating encrypted content data obtained by encrypting the content data to be delivered; and
issuing decoding information for decoding the encrypted content data.

21. A program for causing a computer to execute the steps of:
inputting content data; and
permitting accumulation of the content data in a case where information indicating permission for accumulation is present.

22. A program according to claim 21, wherein the inputting step includes inputting the content data to be delivered from a server through a network.

23. A program according to claim 21, wherein
the content data is encrypted, and
the program comprises the steps of:
referring to decoding information; and
decoding the content data received from the server in accordance with the decoding information.

24. A program according to claim 23, comprising a step of saving the decoded content data in a case where accumulation of the content data is permitted.

25. A program according to claim 24, wherein the saving step includes saving the decoded content data in a protected device in which copying of saved data is not permitted.

26. A program according to claim 23, comprising a step of outputting the decoded content data in a form viewable by a user.

27. A program according to claim 21, wherein the information indicating permission for accumulation is provided by a purchase procedure for content data corresponding to the information.

28. A system comprising a server and a client apparatus, wherein
the server includes means delivering content data to the client apparatus through a network, and
the client apparatus includes:
means receiving the content data;
means accumulating the received content data;
means outputting the received content data in a form viewable by a user; and
means outputting the accumulated content data in a form viewable by the user in a case where information provided by a purchase procedure for the content data is present.

29. An electronic apparatus, comprising:
means inputting the content data;
means accumulating the inputted content data;
means outputting the inputted content data in a form viewable by a user; and
means outputting the accumulated content data in a form viewable by the user in a case where information provided by a purchase procedure for the content data is present.

30. A program for causing a computer to execute the steps of:
inputting content data;
accumulating the inputted content data;
outputting the inputted content data in a form viewable by a user; and
outputting the accumulated content data in a form viewable by the user in a case where information provided by a purchase procedure for the content data is present.
